# EUROPEAN PATENT SPECIFICATION

(11) **EP 1 145 518 B1**
(45) Date of publication and mention of the grant of the patent: **24.11.2004**
(21) Application number: 99903370.7
(22) Date of filing: 26.01.1999
(51) Int. Cl.: H04L 27/26

(54) **MULTICARRIER TRANSMISSION SYSTEM WITH LOW POWER SLEEP MODE AND RAPID-ON-CAPABILITY**
MEHRTRÄGERÜBERTRAGUNGSSYSTEM MIT SCHLAFMODUS MIT NIEDRIGER LEISTUNG UND SCHNELLER EINSCHALTFÄHIGKEIT
SYSTEME DE TRANSMISSION A PORTEUSES MULTIPLES AVEC MODE SOMMEIL A FAIBLE CONSOMMATION ET FONCTION MISE EN MARCHE RAPIDE

(43) Date of publication of application: 17.10.2001
(60) Divisional application: 04022871.0
(73) Proprietor: AWARE, INC., Bedford, MA 01730 (US)
(72) Inventor: GRESZCZUK, John, A., Stow, MA 01775 (US); GROSS, Richard, W., Arlington, MA 02174 (US); PADIR, Halil, N. Andover, MA 01845 (US); TZANNES, Michael, A., Lexington, MA 02173 (US)
(74) Representative: Gesthuysen, von Rohr & Eggert
(86) International application number: PCT/US1999/001539
(87) International publication number: WO 2000/045559

(56) References cited:
- EP-A- 0 473 465
- EP-A- 0 840 474
- US-A- 5 452 288
- MACQ D ET AL.: "A CMOS activity detector for ADSL link " ESSCIRC 95. TWENTY-FIRST EUROPEAN SOLID-STATE CIRCUITS CONFERENCE. , 19 - 21 September 1995, page 430-433 XP002119172 Lille, France

## Description

### BACKGROUND OF THE INVENTION

The invention relates to multicarrier transmission systems, and comprises method and apparatus for establishing a power management sleep state in a multicarrier system.

### SUMMARY OF THE INVENTION

Multicarrier transmission systems provide high speed data links between communication points Such systems have recently been introduced for communications over the local subscriber loop that connects a telephone service subscriber to a central telephone office; in this important application they are commonly referred to as "xDSL" systems, where the "x" specifies a particular variant of DSL (digital subscriber loop) communications, e.g., ADSL (asynchronous digital subscriber loop), HDSL (HighSpeed Digital Subscriber Loop), etc. These will be referred to generically herein simply as "DSL" systems. In such systems, a pair of transceivers communicate with other by dividing the overall bandwidth of the channel interconnecting the subscriber and the central office into a large number of separate subchannels, each of limited bandwidth, operating in parallel with each other. For example, one common system divides the subscriber line channel into two hundred and fifty six subchannels, each of four kilohertz bandwidth. A first group of these (e.g., one hundred ninety six) is allocated to communications from the central office to the subscriber (this is known as the "downstream" direction); a second group (e.g., fifty-five) is allocated to communications from the subscriber to the central office (this is known as the "upstream" direction). The remaining subchannels are allocated to administrative, control and overhead functions.

Data to be communicated over the link is divided into groups of bits, one group for each subchannel. The group of bits allocated to a given subchannel is modulated onto a carrier whose frequency is specific to that channel. Typically, quadrature amplitude modulation (QAM) is used for this purpose, and the group of bits is mapped into a vector defined by one of the points of a "constellation" which specifies the allowable data points for transmission over that subchannel at a particular time. Each vector or data point thus comprises a unique symbol representing a specific bit configuration for transmission as a group over its associated subchannel. During the time period allocated for transmission of a symbol (commonly referred to as a "symbol period" or "frame"), each subchannel transmits its symbol in parallel with all other subchannels so that large amounts of data can be transmitted during each frame.

The number of bits carried by a symbol is dependent on the characteristics of the subchannel over which it is to be transmitted. This may vary from one subchannel to another. The principal determinant is the signal-to-noise ratio of the subchannel. Accordingly, this parameter is measured from time to time in order to ascertain its value for each subchannel, and thus determine the number of bits to be transmitted on the particular subchannel at a given time.

The telephone channel is subject to a number of impairments which must be compensated for in order to ensure reliable transmission. Phase (delay) distortion of the transmitted signal is typically the most limiting of these impairments. This distortion is frequency-dependent, and thus components of a signal at different frequencies are shifted by varying amounts, thereby distorting the signal and increasing the likelihood of erroneous detection unless provision is made to combat it. To this end, frequency (FDQ) and time delay (TDQ) equalizers are commonly incorporated into the transmission channel in order to equalize the phase (time) delay across the channel frequency band.

Other impairments also exist. For example, frequency-dependent signal attenuation adversely affects signal transmission on the telephone line. This is compensated by the use of gain equalizers on the line. Echo on the line is handled by the use of echo cancellers, and phase and frequency offsets which may arise, for example, from the use of frequency-division-multiplexing in the telephone system must also be corrected for.

The problem of signal impairment is especially serious in those xDSL configurations which carry the DSL communications on a common line with ordinary voice communications but which omit the use of a "splitter" at either the subscriber premises or the central office or both. A "splitter" is basically a filter which separates the low-frequency voice communications (e.g., from zero to four kilohertz) from the higher-frequency data communications (which may extend up into the megahertz band) and provides a strong degree of isolation between the two. In the absence of a splitter, unique provisions must be made to accommodate voice and data communications on the same line. For a more detailed description of the problem and its solution, see the copending application of Richard Gross et al. entitled "Splitterless Multicarrier Modem", WO-A-9920027 published on 22,04,1999 and assigned to the assignee of the present invention.

Because of their extensive use in Internet communications as well as in other applications, DSL transceivers are commonly maintained in the "on" state, ready to transmit or receive once they have been installed and initialized. Thus, such modems consume a significant amount of power, even when they are not actively transmitting or receiving data. It is generally desirable to limit this power consumption, both for environmental reasons as well as to prolong the life of the equipment. Further, such modems may be implemented or incorporated in part or in whole in computer equipment such as in personal computers for home and business use, and such computers increasingly incorporate power conservation procedures. See, for example, U.S. Patent No. 5,428,790, "Computer Power Management System", issued June 27, 1995 on the application ofL. D. Harper. Thus, it is desirable to provide an ADSL modem which can accommodate power conservation procedures.

Because of the complexity of DSL transceivers, and the conditions under which they must operate, it is necessary to initialize them prior to the transmission and reception of data. This initialization includes, *inter alia,* channel corrections such as "training" the frequency- and time-domain equalizers and the echo cancellers; setting the channel gains, adjusting for phase and frequency offsets; and the like. Additionally, it includes measuring the signal-to-noise ratio of each of the subchannels, calculating the bit-allocation tables characteristic of each under given conditions of transmission, and exchanging these tables with other modems with a given modem communicates. For more detailed discussion of these procedures, refer to the application of Richard Gross et al., cited above. These procedures can require from tens to hundreds of seconds. In a new installation, the time required is inconsequential. However, in an already-operating installation, the time required to initialize or re-initialize the system after a suspension of operation in connection with power conservation is generally unacceptable, since it is typically desired to have the modem respond to request for service nearly instantaneously.

Accordingly, it is an object of the invention to provide a multicarrier transmission system having a low power sleep mode and a rapid-on capability.

Further, it is an object of the invention to provide a multicarrier transmission system for use in digital subscriber line communications that can rapidly switch from a sleep mode to a full-on condition.

Still another object of the invention is to provide a DSL system that can readily be integrated into a computer having a low power sleep mode and which is capable of rapid return to full operation.

### BRIEF DESCRIPTION OF THE DRAWINGS

The invention description below refers to the accompanying drawings, of which:
Fig. 1 is a block and line diagram of a multicarrier transmission system in accordance with the present invention; and
Fig. 2 is a flow diagram of the operation of the present invention.

### DETAILED DESCRIPTION OF AN ILLUSTRATIVE EMBODIMENT

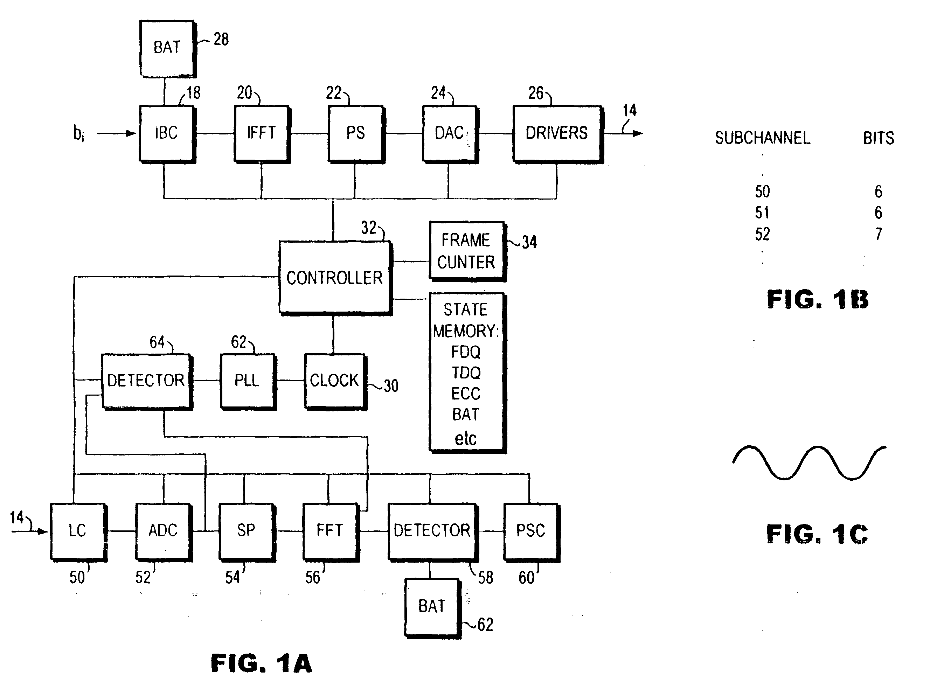

In Figure 1, a DSL transceiver 10 in accordance with the present invention has a transmitter section 12 for transmitting data over a digital subscriber line 14 and a receiver section 16 for receiving data from the line. The transmitter section 12 is formed from an input buffer and converter 18 that receives a serial string of data (e.g., binary digits) to be transmitted and converts the data into a plurality of pairs of complex-valued symbols Xᵢ and their conjugates X_{N-i} = X*ᵢ, i = 0, 1, ....N. These pairs of symbols are applied to an Inverse Fast Fourier Transform (IFFT) 20 to provide real time output signals xⱼ, j = 0, 1, .....N/2 -1. The latter in turn are converted to serial form in a parallel-to-serial converter 22 and then applied to a digital-to-analog converter 24 for application to a line driver 26. The converter may apply a cyclic prefix to the signals xⱼ to combat intersymbol interference caused by the transmission medium. The driver 26 may incorporate a gain control section 26a for controlling the signal amplitude (and thus power) as it is applied to a communication channel such as a digital subscriber line 24

IFFT 20 may be viewed as a data modulator. The symbols Xᵢ, and their conjugates X_{N-i} , correspond to data points defining signal vectors in a quadrature amplitude modulation (QAM) constellation set. The converter 18 forms the respective symbols from the input data with the aid of a bit allocation table (BAT) 28 which specifies, for each subchannel, the number of bits to be carried by the symbol transmitted over that subchannel, and thus defines the data point to be associated with the symbol. This table is typically calculated at the transceiver and transmitted to other transceivers with which the instant transceiver communicates, to thereby enable them to decode the symbols received by them from the instant transceiver.

The number of bits which each symbol carries is determined by the characteristics of the subchannel over which the symbol is to be transmitted, and particularly by the signal-to-noise ratio of the subchannel. Procedure for this calculation are known. Figure 1A shows an example of such a table as formed and stored at transceiver 10. Thus, the symbol to be transmitted over subchannel 50 may be determined to have an allocation of six bits; that of subchanel 51, six bits; that of subchannel 52, seven bits, etc.

A Clock 30 controls the timing of the operation of the transmitter 12. It supplies input to a Controller 32 which controls the individual units of the transmitter. In the case of a transceiver located at a central telephone office, the clock 30 typically is a master clock to which a remote transceiver, such as at a subscriber premises, will be synchronized. In the case of a transceiver at the subscriber premises, such as is shown her for purposes of illustration, the clock is derived from the master clock at the central office as described more fully below in connection with the receiver portion of the transceiver. A Frame Counter (FC) 36 connected to the controller 32 maintains a count of the number of frames of data transmitted or received by the transceiver. Finally, a State Memory (SM) connected to the controller 34 records the state of the transceiver for reasons discussed more fully below.

Turning now to the receiver section 16, it is formed from a line conditioner 50; an analog-to-digital converter (ADC) 52; a serial-to-parallel converter 54; a Fast Fourier Transform (FFT) section 56; a detector 58; and a parallel-to-serial converter 60. The conditioner 50 compensates for transmission distortions introduced by the line 14, and commonly includes a frequency-domain equalizer (FDQ) 50a; a time-domain equalizer (TDQ) 50b; and an echo canceller (EC) 50c, among other elements. The ADC 52 converts the received signal to digital form and applies it to the serial-to-parallel converter 54. The converter 54 removes any cyclic prefix that may have been appended to the signal before it was transmitted, and applies the resultant signal to the FFT 56 which effectively "demodulates" the received signal. The output of the FFT is applied to decoder58 which, in conjunction with a bit-allocation-table 62, recovers the symbols Xᵢ and the bits associated with them. The output of detector 58 is applied to the parallel-to-serial converter 60 which restores the data stream that was originally applied to the transmitter.

A phase-lock loop (PLL) 62 receives from the line conditioner 50 a timing reference signal transmitted from the transmitter with which it communicates (e.g., the CO transceiver). The PLL 62 locks itself to this signal and drives a clock 64 in synchronism with the Master Clock in the driving transmitter Control of the receiver section is provided by the controller 32.

As noted earlier, the transceiver of the present invention will commonly be incorporated in a computer such as a personal computer; indeed, it may be implemented as an integral part of such a computer, which may have a power conservation capability for activation when the computer is not in active operation. It is thus desirable that the transceiver be able to suspend operations and enter a "sleep" mode in which it consumes reduced power when it is not needed for data transmission or reception, but nonetheless be able to resume transmission or reception almost instantaneously, e.g., with less than a one-second delay. This is accomplished in the present invention as follows.

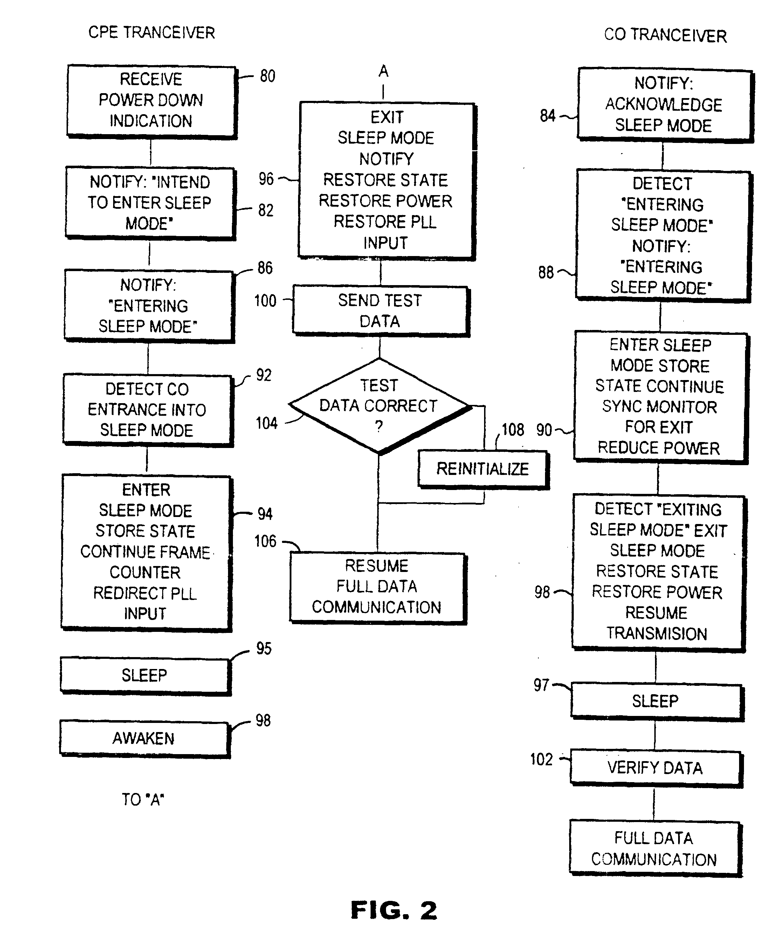

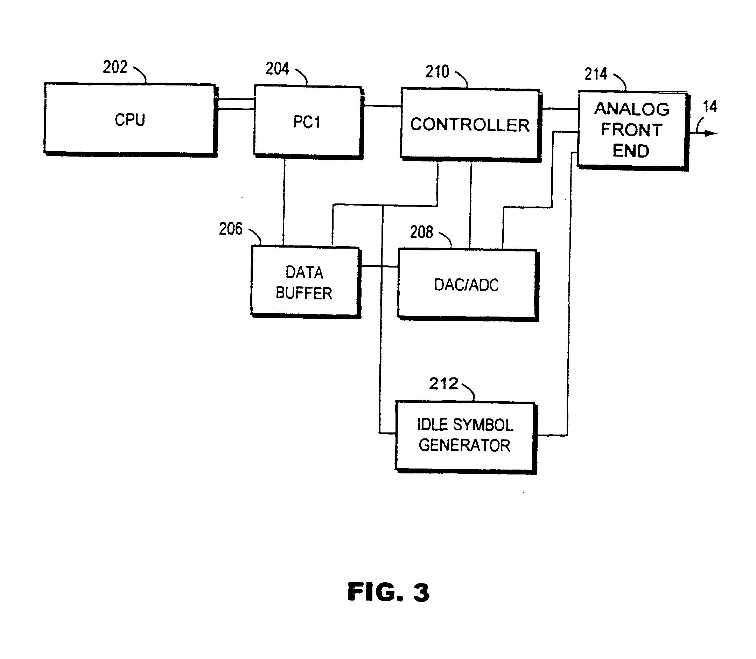

For purposes of illustration, the operation of the invention will be explained in terms of a transceiver located at a customer premises (herein termed the "CPE transceiver") communicating data over the customer's data subscriber line to a transceiver located at the central telephone office (herein referred to as the "CO transceiver"). Particular reference will be made to Figures 2 and 3 in connection with this discussion. The power down operation of the CPE transceiver begins on receipt of a power down command (step 80) by the CPE transceiver controller 32. The power down command may be applied to the controller 32 from an external source such as a personal computer in which the transceiver is included; it may be generated within the transceiver itself as a result of monitoring the input buffer 18 and determining that no data has been applied to it for a given time interval; or it may be responsive to a power down command from the CO transceiver.

Considering for the moment the first two cases, the CPE transceiver responds to the command by transmitting to the CO transceiver an "Entering Sleep Mode" signal (step 82). The CO transceiver responds by transmitting an "Acknowledge Sleep Mode" signal (step 84) to the CPE transceiver. Additionally, the CO transceiver transmits to the CPE transceiver a pilot tone (step 86) which enables the CPE transceiver to maintain synchronization with the CO transceiver during sleep mode. Specifically, as shown in Figure 1, the pilot tone is applied from the line conditioner 50 to the PLL 62 which drives the Local Clock 64 in synchrony with the Master Clock 30 at the CO transceiver. Clock 64 in turn drives the Frame Counter 66 in synchrony with the frame counter 36 at the CO transceiver.

The CO transceiver also stores its state (step 88) in receiver section state memory 38. The state preferably includes at least the frequency and time-domain equalizer coefficients (FDQ; TDQ) and the echo-canceller coefficients (ECC) of its receiver and the gain of its transmitter. The CO transceiver will also maintain the frame count and superframe count (step 90) to ensure synchrony with the remote CPE transceiver. It may, at this time, perform its own power reduction (step 92). In particular, it may reduce or cut off power to the digital modulator/demodulator portions of its transmitter and receiver sections; this provides a significant power reduction. Power will be maintained, of course, to at least that portion of the analog driver circuitry which transmits the pilot tone and other control signals to the CPE transceiver.

In response to the acknowledgment from the CO transceiver, the CPE transceiver enters the sleep mode (step 94) in which reduced or no power is applied to various components of the transceiver. In particular, it stores its state (step 96) in state memory 38, including preferably at least the frequency and time-domain equalizer coefficients (FDQ; TDQ) and the echo-canceller coefficients (ECC) of its receiver section, the gain of its transmitter section, and phase and frequency offset of its phase-locked loop 62. It then powers down (step 98) its transmitter section, including both the digital modulator/demodulator circuitry and the analog line drivers.

During the sleep mode state, the CO transceiver continues to monitor (step 100) the data subscriber line for an "Awakening" signal from the CPE transceiver (step 104). The CPE transceiver transmits this signal when its controller receives an "Awaken" command (step 102) from an external source such as a computer in which it is installed or from other sources , or when its controller detects the presence of data in the input buffer 18. The CPE transceiver thereupon restores full power to its circuitry (step 106). It also retrieves its stored state from the state memory 38 (step 108) It can then immediately begin transmitting , since it need not repeat the initialization that was earlier required to establish requisite parameters (equalizer coefficients, echo canceller coefficients, gain, phase -lock-loop phase and frequency offsets, etc.). Prior to this time, of course, and in response to the "Awakening" signal from the CPE transceiver, the CO transceiver has restored its power (step 110), restored its state (step 112), and is ready to receive (step 114).

On resuming communication, it may be desirable to transmit several frames of test (known) data (step 116) before resuming transmission of user data. This enables the system to verify that system conditions have not changed so significantly as to require renewed initialization. If the test is satisfactory (step 118), user data transmission then occurs (step 120). Otherwise, reinitialization must be performed (step 122) before user data transmission occurs.

As noted earlier, the transceiver 10 may alternatively be awakened by the CO transceiver. This is preferably accomplished by means of a tone 120 (Figure 3) transmitted from the latter to the CPE receiver. In response to that tone, the CPE receiver performs the sequence of steps shown at 100-110 in Figure 2.

## Claims

1. A multicarrier transceiver (10) having a sleep mode capability, comprising
A. means responsive to a sleep mode command for:
(1) storing selected state parameters characteristic of the communications channel over which the transceiver is operating; and
(2) reducing power to selected portions of transceiver circuitry;
and
B. means responsive to a wake-up command for:
(1) restoring power to said transceiver;
(2) restoring the state of said transceiver from said sleep mode by means of said stored parameters; and
C. means for maintaining a common, synchronized data frame count between said transceiver and a remote transceiver with which it communicates, to thereby facilitate restoration of communication without reinitialization of said transceiver.

2. A multicarrier transceiver according to claim 1 in which said state parameters include one or more parameters selected from the group comprising frequency-domain equalizer coefficients, time-domain equalizer coefficients, echo canceller coefficients, bit allocations, coding parameters, fine gains, and subchannel gains.

3. A multicarrier transceiver according to claim 1 in which the means for maintaining said frame count comprises a signal defining a timing reference during at least the time when said first transceiver is in sleep mode.

4. A multicarrier transceiver according to claim 3 in which said signal comprises a pilot tone transmitted from one transceiver to another with which it is in communication.

5. A multicarrier transceiver according to claim 4 in which said pilot tone is transmitted between said transceivers during both normal operation and reduced power operation.

6. A multicarrier transceiver according to claim 1 in which maintaining synchronization includes maintaining synchronization of frame counters between said transceivers.

7. A multicarrier transceiver according to claim 6 in which maintaining synchronization further includes maintaining synchronization of the phase of a synchronizing signal transmitted between said transceivers.

8. A multicarrier transceiver according to claim 1 including means to transmit an idle symbol to said remote transceiver when said transceiver is in sleep mode.

9. A multicarrier transceiver according to claim 1 including means to transmit to said remote transceiver a short test signal on awaking from sleep mode in order to determine whether transmission conditions have changed sufficiently during sleep mode to require reinitialization of said transceiver on emerging from sleep mode.

10. A multicarrier transceiver (10) including
A. mean for storing the state parameters of said transceiver responsive to a state change indicator;
B. means for restoring said state from the stored state parameters to thereby obviate reinitialization of said transceiver on return from sleep mode;
C. means detecting the absence of valid frame information for generating said state change indicator.

11. A multicarrier transceiver including
A. means for storing the state of transceiver responsive to an interruption of valid data transmission;
B. means for entering a sleep mode during said interruption;
C. means for maintaining communication of a synchronizing signal between said transceiver and another transceiver during sleep mode.; and
D. means for restoring said state from the stored state parameters to thereby obviate reinitialization of said transceiver on return from sleep mode.

12. A multicarrier transceiver according to claim 11 in which communication is maintained by transmitting a synchronizing signal to said other transceiver.

13. A multicarrier transceiver according to claim 11 in which communication is maintained by receiving a synchronizing signal from said other transceiver.

14. A multicarrier transceiver according to claim 11 in which said state includes one or more parameters selected from the set comprising frequency-domain equalizer coefficients, time-domain equalizer coefficients, echo cancelled coefficients, bit allocations, coding parameter, fine gains and subchannel gains.

15. A method of providing a sleep mode in a multicarrier transceiver **characterized by** a plurality of state parameters characteristic of the communications channel over which the transceiver is operating and requiring initialization of said parameters for normal communications, comprising the steps of:
A. storing selected ones of said state parameters in response to a sleep mode command;
B. reducing power to selected portions of the circuitry following said storing;
C. restoring power to said selected portions in response to an awaken signal; and
D. restoring the state of said transceiver from said stored parameters in response to said wakeup signal to thereby obviate reinitialization of said transceiver.

16. A method according to claim 15 in which said selected state parameters comprise one or more parameters selected from the group comprising frequency-domain equalizer coefficients, time-dornain equalizer coefficients, echo canceller coefficients, bit allocations, coding parameters, fine gains, and subchannel gains.

17. A method according to claim 15 or 16 including the step of maintaining synchronization in said transceiver with a synchronization signal transmitted to said said transceiver during the time that said transceiver is in sleep mode.

## Patentansprüche

1. Transceiver (10) mit einer Schlafmodus-Funktion, umfassend:
A. ein Mittel, das auf einen Schlafmodus-Befehl anspricht, zum:
(1) Speichern ausgewählter Zustandsparameter, die für den Kommunikationskanal, über den der Transceiver arbeitet, kennzeichnend sind; und
(2) Verringern der Stromzufuhr zu ausgewählten Abschnitten der Transceiver-Schaltkreise;
und
B. ein Mittel, das auf einen Weckbefehl anspricht, zum:
(1) Wiederherstellen der Stromzufuhr zu dem Transceiver;
(2) Wiederherstellen des Zustands des Transceivers aus dem Schlafmodus anhand der gespeicherten Parameter; und
C. ein Mittel zum Aufrechterhalten einer gemeinsamen synchronisierten Datenblockzählung zwischen dem Transceiver und einem räumlich abgesetzten Transceiver, mit dem er kommuniziert, um auf diese Weise die Wiederherstellung der Kommunikation ohne Reinitialisierung des Transceivers zu ermöglichen.

2. Transceiver nach Anspruch 1, wobei die Zustandsparameter einen oder mehrere Parameter enthalten, die aus folgender Gruppe ausgewählt sind: Frequenzebenen-Entzerrungskoeffizienten, Zeitebenen-Entzerrungskoeffizienten, Echokompensatorkoeffizienten, Bitzuweisungen, Kodierungsparameter, Feinverstärkungen und Unterkanalverstärkungen.

3. Transceiver nach Anspruch 1, wobei das Mittel zum Aufrechterhalten der Datenblockzählung ein Signal umfasst, das eine Taktreferenz wenigstens während der Zeit definiert, da der erste Transceiver sich im Schlafmodus befindet.

4. Transceiver nach Anspruch 3, wobei das Signal einen Pilotton umfasst, der von einem Transceiver zu einem anderen Transceiver, mit dem er in Kommunikation steht, übertragen wird.

5. Transceiver nach Anspruch 4, wobei der Pilotton sowohl während des normalen Betriebes als auch während den stromreduzierten Betriebes zwischen den Transceivem übertragen wird.

6. Transceiver nach Anspruch 1, wobei das Aufrechterhalten der Synchronisation das Aufrechterhalten der Synchronisation von Datenblockzählern zwischen den Transceivem enthält.

7. Transceiver nach Anspruch 6, wobei das Aufrechterhalten der Synchronisation des Weiteren das Aufrechterhalten der Synchronisation der Phase eines Synchronisierungssignals, das zwischen den Transceivem übertragen wird, enthält.

8. Transceiver nach Anspruch 1 mit einem Mittel zum Übertragen eines Ruhesymbols zu dem räumlich abgesetzten Transceiver, wenn der Transceiver sich im Schlafmodus befindet.

9. Transceiver nach Anspruch 1 mit einem Mittel zum Übertragen eines kurzen Testsignals zu dem räumlich abgesetzten Transceiver beim Erwachen aus dem Schlafmodus, um zu ermitteln, ob sich die Übertragungsbedingungen während des Schlafmodus' genügend geändert haben, um eine Reinitialisierung des Transceivers beim Erwachen aus dem Schlafmodus erforderlich zu machen.

10. Transceiver (10) mit:
A. einem Mittel zum Speichern der Zustandsparameter des Transceivers, das auf einen Zustandsänderungsindikator anspricht;
B. einem Mittel zum Wiederherstellen des Zustandes anhand der gespeicherten Zustandsparameter, um auf diese Weise eine Reinitialisierung des Transceivers bei der Rückkehr aus dem Schlafmodus überflüssig zu machen;
C. einem Mittel zum Erkennen des Fehlens gültiger Datenblockinformationen zum Erzeugen des Zustandsänderungsindikators.

11. Transceiver mit:
A. einem Mittel zum Speichern des Zustandes des Transceivers, das auf eine Unterbrechung einer gültigen Datenübertragung anspricht;
B. einem Mittel zum Überwechseln in einen Schlafmodus während der Unterbrechung;
C. einem Mittel zum Aufrechterhalten der Kommunikation eines Synchronisierungssignals zwischen dem Transceiver und einem anderen Transceiver während des Schlafmodus';
D. einem Mittel zum Wiederherstellen des Zustandes anhand der gespeicherten Zustandsparameter, um auf diese Weise eine Reinitialisierung des Transceivers bei der Rückkehr aus dem Schlafmodus überflüssig zu machen.

12. Transceiver nach Anspruch 11, wobei die Kommunikation durch das Senden eines Synchronisierungssignals zu dem anderen Transceiver aufrecht erhalten wird.

13. Transceiver nach Anspruch 11, wobei die Kommunikation durch das Empfangen eines Synchronisierungssignals von dem anderen Transceiver aufrecht erhalten wird.

14. Transceiver nach Anspruch 11, wobei der Zustand einen oder mehrere Parameter enthält, die aus folgender Gruppe ausgewählt sind: Frequenzebenen-Entzerrungskoeffizienten, Zeitebenen-Entzerrungskoeffizienten, Echokompensatorkoeffizienten, Bitzuweisungen, Kodierungsparameter, Feinverstärkungen und Unterkanalverstärkungen.

15. Verfahren zum Bereitstellen eines Schlafmodus' in einem Transceiver, **gekennzeichnet durch** eine Mehrzahl von Zustandsparametern, die für den Kommunikationskanal, über den der Transceiver arbeitet, kennzeichnend sind, und wobei die Initialisierung dieser Parameter für eine normale Kommunikation erforderlich ist, umfassend folgende Schritte:
A. Speichern ausgewählter Zustandsparameter in Reaktion auf einen Schlafmodus-Befehl;
B. Verringern der Stromzufuhr zu ausgewählten Abschnitten der Schaltkreise im Anschluss an das Speichern;
C. Wiederherstellen der Stromzufuhr zu den ausgewählten Abschnitten in Reaktion auf ein Wecksignal; und
D. Wiederherstellen des Zustands des Transceivers anhand der gespeicherten Parameter in Reaktion auf das Wecksignal, um auf diese Weise eine Reinitialisierung des Transceivers überflüssig zu machen.

16. Verfahren nach Anspruch 15, wobei die ausgewählten Zustandsparameter einen oder mehrere Parameter umfassen, die aus folgender Gruppe ausgewählt sind: Frequenzebenen-Entzerrungskoeffizienten, Zeitebenen-Entzerrungskoeffizienten, Echokompensatorkoeffizienten, Bitzuweisungen, Kodierungsparameter, Feinverstärkungen und Unterkanalverstärkungen.

17. Verfahren nach Anspruch 15 oder 16, mit dem Schritt des Aufrechterhaltens der Synchronisation in dem Transceiver mit einem Synchronisationssignal, das während der Zeit, in der der Transceiver sich im Schlafmodus befindet, an den Transceiver gesendet wird.

## Revendications

1. Emetteur-récepteur (10) à ondes porteuses multiples ayant une capacité de mode veille, comprenant :
A. Des moyens qui répondent à une commande de mode veille pour :
(1) stocker des paramètres d'état sélectionnés caractéristiques des canaux de communication sur lesquels l'émetteur-récepteur fonctionne ; et
(2) réduire l'alimentation électrique de portions sélectionnées des circuits de l'émetteur-récepteur ; et
B. Des moyens qui répondent à une commande de réveil pour :
(1) restaurer l'alimentation électrique dudit émetteur-récepteur ;
(2) restaurer l'état dudit émetteur-récepteur à partir dudit mode veille au moyen desdits paramètres stockés ; et
C. Des moyens pour maintenir un décompte de trames de données synchronisé, commun entre ledit émetteur-récepteur et un émetteur-récepteur distant avec lequel il communique, afin de faciliter ainsi la restauration de communication sans réinitialisation dudit émetteur-récepteur.

2. Emetteur-récepteur à ondes porteuses multiples selon la revendication 1, dans lequel lesdits paramètres d'état incluent un ou plusieurs paramètres choisis dans le groupe comprenant des coefficients d'égaliseur domaine-fréquence, des coefficients d'égaliseur domaine-temps, des coefficients d'annuleur d'écho, des allocations de bits, des paramètres de codage, des gains fins et des gains de sous-canal.

3. Emetteur-récepteur à ondes porteuses multiples selon la revendication 1, dans lequel le moyen pour maintenir ledit décompte de trame comprend un signal qui définit une référence de rythme pendant au moins le temps pendant lequel ledit premier émetteur-récepteur est en mode veille.

4. Emetteur-récepteur à ondes porteuses multiples selon la revendication 3, dans lequel ledit signal comprend une tonalité pilote transmise à partir d'un émetteur-récepteur vers un autre avec lequel il est en communication.

5. Emetteur-récepteur à ondes porteuse multiples selon la revendication 4, dans lequel ladite tonalité pilote est transmise entre lesdits émetteurs-récepteurs à la fois pendant le fonctionnement normal et le fonctionnement en alimentation réduite.

6. Emetteur-récepteur à ondes porteuses multiples selon la revendication 1, dans lequel le maintien de la synchronisation inclut le maintien de la synchronisation des compteurs de trame entre lesdits émetteurs-récepteurs.

7. Emetteur-récepteur à ondes porteuses multiples selon la revendication 6, dans lequel le maintien de la synchronisation inclut en outre le maintien de la synchronisation de la phase d'un signal de synchronisation transmis entre lesdits émetteurs-récepteurs.

8. Emetteur-récepteur à ondes porteuses multiples selon la revendication 1, incluant un moyen pour transmettre un symbole inactif audit émetteur-récepteur distant lorsque ledit émetteur-récepteur est en mode veille.

9. Emetteur-récepteur à ondes porteuses multiples selon la revendication 1, incluant un moyen pour transmettre audit émetteur-récepteur distant un court signal de test pendant le réveil du mode veille afin de déterminer si les conditions de transmission ont changé suffisamment pendant le mode veille pour requérir la réinitialisation dudit émetteur-récepteur lorsque ce dernier émerge du mode veille.

10. Emetteur-récepteur (10) à ondes porteuses multiples, incluant :
A. Un moyen pour stocker les paramètres d'état desdits émetteurs-récepteurs en réponse à un indicateur de changement d'état ;
B. Un moyen pour restaurer ledit état à partir des paramètres d'état stockés afin d'éviter ainsi la réinitialisation dudit émetteur-récepteur qui émerge du mode veille ;
C. Un moyen pour détecter l'absence d'information de trame valide pour générer ledit indicateur de changement d'état.

11. Emetteur-récepteur à ondes porteuses multiples incluant :
A. Un moyen pour stocker l'état de l'émetteur-récepteur en réponse à une interruption d'une transmission de données valide ;
B. Un moyen pour entrer en mode veille pendant ladite interruption ;
C. Un moyen pour maintenir la communication d'un signal de synchronisation entre ledit émetteur-récepteur et un autre émetteur-récepteur pendant le mode veille ; et
D. Un moyen pour restaurer ledit état à partir des paramètres d'état stockés de manière à éviter la réinitialisation dudit émetteur-récepteur lorsque ce dernier émerge du mode veille.

12. Emetteur-récepteur à ondes porteuses multiples selon la revendication 11, dans lequel la communication est maintenue en transmettant un signal de synchronisation audit autre émetteur-récepteur.

13. Emetteur-récepteur à ondes porteuses multiples selon la revendication 11, dans lequel la communication est maintenue en recevant un signal de synchronisation dudit autre émetteur-récepteur.

14. Emetteur-récepteur à ondes porteuses multiples selon la revendication 11, dans lequel ledit état inclut un ou plusieurs paramètres choisis dans le groupe comprenant des coefficients d'égaliseur domaine-fréquence, des coefficients d'égaliseur domaine-temps, des coefficients d'annuleur d'écho, des allocations de bits, des paramètres de codage, des gains fins et des gains de sous-canal.

15. Procédé pour instituer un mode veille dans un émetteur-récepteur à ondes porteuses multiples, **caractérisé par** une pluralité de paramètres d'état caractéristiques des canaux de communication sur lesquels l'émetteur-récepteur fonctionne et requérant l'initialisation desdits paramètres pour des communications normales, comprenant les étapes qui consistent à :
A. Stocker les paramètres sélectionnés parmi lesdits paramètres d'état en réponse à une commande de mode veille ;
B. Réduire l'alimentation électrique de portions sélectionnées du circuit à la suite dudit stockage ;
C. Restaurer l'alimentation électrique desdites portions sélectionnées en réponse à un signal de réveil ; et
D. Restaurer l'état dudit émetteur-récepteur à partir desdits paramètres stockés en réponse audit signal de réveil de manière à éviter ainsi la réinitialisation dudit émetteur-récepteur.

16. Procédé selon la revendication 15, dans lequel lesdits paramètres d'état sélectionnés comprennent un ou plusieurs paramètres choisis dans le groupe comprenant des coefficients d'égaliseur domaine-fréquence, des coefficients d'égaliseur domaine-temps, des coefficients d'annuleur d'écho, des allocations de bits, des paramètres de codage, des gains fins et des gains de sous-canal.

17. Procédé selon la revendication 15 ou 16, incluant l'étape de maintien de la synchronisation dans ledit émetteur-récepteur avec un signal de synchronisation transmis audit émetteur-récepteur pendant le temps que ledit émetteur-récepteur est en mode veille.
